# EUROPEAN PATENT APPLICATION

(11) **EP 4 733 645 A1**
(43) Date of publication of application: **29.04.2026**
(21) Application number: 24848191.3
(22) Date of filing: 26.07.2024
(51) Int. Cl.: F16K 31/06, F16K 31/363, F16K 15/00, F16K 11/22

(54) **VALVE MODULE AND SOLENOID VALVE**

(30) Priority: 31.07.2023 CN 202310957770
(71) Applicant: Zhejiang Dunan Artificial Environment Co., Ltd., Shaoxing Zhejiang 311835 (CN)
(72) Inventor: LIN, Yuanyang, Shaoxing, Zhejiang 311835 (CN); LOU, Xuanbo, Shaoxing, Zhejiang 311835 (CN); YU, Zhou, Shaoxing, Zhejiang 311835 (CN)
(74) Representative: Inchingalo, Simona
(86) International application number: PCT/CN2024/107942
(87) International publication number: WO 2025/026234

(57) **Abstract**

Provided are a valve module and a solenoid valve. The valve module includes: a valve assembly (10), the valve assembly (10) being provided with a first accommodating cavity (11), a piston cavity (12), and a pilot valve port (13); a movable iron core (20) movably arranged in the first accommodating cavity (11), the movable iron core (20) being provided with a valve needle main cavity (21); a piston assembly (30), the piston assembly (30) being configured to open and close the pilot valve port (13), the piston assembly (30) being provided with a through piston channel (31), an end of the piston channel (31) serving as a pressure relief port (311), and an other end of the piston channel (31) being in communication with the pilot valve port (13); a return spring (40) arranged in the first accommodating cavity (11), the return spring (40) applying an elastic force to the movable iron core (20); and a small valve needle (50) arranged in the valve needle main cavity (21), wherein in a state that the pilot valve port (13) is closed, the movable iron core (20) is capable of abutting against the piston assembly (30), and the small valve needle (50) closes the pressure relief port (311). The elastic force of the return spring (40) of the valve module can act on the piston assembly (30) by means of the movable iron core (20), so that the solenoid valve is reliably opened and closed. The elastic force of the return spring (40) is prevented from directly causing a relatively large impact on the pressure relief port (311), thereby ensuring the sealing at the pressure relief port (311) during long-term use.

## Description

This disclosure claims priority to patent application No. 202310957770.4, entitled "Valve Module and Solenoid Valve" filed with the China National Intellectual Property Administration on July 31, 2023.

### Technical Field

This disclosure relates to the technical field of valves, and specifically, to a valve module and a solenoid valve.

### Background

Currently, for an existing solenoid valve, the sealing of a valve port of the solenoid valve generally requires a larger sealing force as a size of the valve port increases. Therefore, to ensure the sealing force, a traditional solenoid valve uses a spring with a relatively large elastic force to provide an elastic force. The traditional solenoid valve is provided with the spring to apply the elastic force to an iron core, the iron core transmits the elastic force to a valve needle, and then, the valve needle transmits the elastic force to a pressure relief port of a piston assembly, thereby controlling the piston assembly to close a pilot valve port. However, due to different inner diameters of the pressure relief port and the pilot valve port and the same acting force (elastic force) applied to the pressure relief port and the pilot valve port, during a closing process of the solenoid valve, the elastic force has a relatively large impact on the pressure relief port through the valve needle, and long-term use may affect the sealing at the pressure relief port, thereby affecting the flow accuracy and service life of the solenoid valve.

### Summary

This disclosure provides a solenoid valve to solve the problem that during a closing process of a solenoid valve in the prior art, an elastic force has a relatively large impact on a pressure relief port through a valve needle, and long-term use may affect the sealing at the pressure relief port, thereby affecting the flow accuracy and service life of the solenoid valve.

In order to solve the above problem, according to one aspect of this disclosure, this disclosure provides a valve module, including: a valve assembly, the valve assembly being provided with a first accommodating cavity, a piston cavity, and a pilot valve port arranged in sequence; a movable iron core movably arranged in the first accommodating cavity, the movable iron core being provided with a valve needle main cavity; a piston assembly movably arranged in the piston cavity, the piston assembly being configured to open and close the pilot valve port, the piston assembly being provided with a through piston channel, an end of the piston channel serving as a pressure relief port, and an other end of the piston channel being in communication with the pilot valve port; a return spring arranged in the first accommodating cavity, the return spring applying an elastic force towards the piston assembly to the movable iron core; and a small valve needle arranged in the valve needle main cavity, the small valve needle being configured to open and close the pressure relief port, wherein in a state that the pilot valve port is closed, the movable iron core is capable of abutting against the piston assembly, and the small valve needle closes the pressure relief port.

Further, the small valve needle is movably arranged in the valve needle main cavity; and the valve module further includes a valve needle spring, the valve needle spring is arranged in the valve needle main cavity, and the valve needle spring applies an elastic force towards the pressure relief port to the small valve needle.

Further, the elastic force provided by the return spring to the movable iron core is greater than the elastic force provided by the valve needle spring to the small valve needle.

Further, when the movable iron core and the small valve needle move synchronously towards the piston assembly until the small valve needle is in contact with the piston assembly, the elastic force of the return spring is F1, and the elastic force of the valve needle spring is f1, wherein F1 >5f1.

Further, when the movable iron core moves towards the piston assembly until the movable iron core is in contact with the piston assembly, the elastic force of the return spring is F2, and the elastic force of the valve needle spring is f2, wherein F2>3.5f2.

Further, when the movable iron core, the small valve needle, and the piston assembly move synchronously towards the pilot valve port until the piston assembly is in contact with the pilot valve port, the elastic force of the return spring is F3, and the elastic force of the valve needle spring is f3, wherein F3>2f3.

Further, a maximum deformation of the valve needle spring in an axial direction is not less than a maximum length of a part of the small valve needle extending out of the valve needle main cavity in an axial direction.

Further, an end of the movable iron core close to the piston assembly is provided with a convex part, the convex part is configured to abut against the piston assembly, and at least a part of the valve needle main cavity is located in the convex part.

Further, an area formed at an abutting position between the convex part and the piston assembly is not less than an area formed at an abutting position between the pilot valve port and the piston assembly.

Further, the valve module further includes a snap ring, the snap ring is arranged in the piston cavity, the piston assembly is located between the pilot valve port and the snap ring, and the snap ring is configured to axially limit the piston assembly.

Further, the valve needle main cavity includes a first spring cavity, a fluid channel, and a valve needle cavity in communication sequentially; and a balance channel is also formed inside the movable iron core, an end of the balance channel is in communication with the first accommodating cavity, and an other end of the balance channel is in communication with any of the first spring cavity, the fluid channel, and the valve needle cavity.

According to another aspect of this disclosure, a solenoid valve is provided. The solenoid valve includes the above valve module. The solenoid valve further includes: a valve body internally provided with a first mounting cavity, a first pressure channel in communication with the first mounting cavity, a second pressure channel in communication with the first mounting cavity, a first circulation port capable of being in communication with the first mounting cavity, and a second circulation port in communication with the first mounting cavity; and an on-off assembly movably arranged in the first mounting cavity and configured to control a connection or disconnection between the first circulation port and the second circulation port; the valve module is arranged on the valve body, and controls the connection or disconnection between the first circulation port and the second circulation port by controlling the on-off assembly; the first pressure channel is in communication with the piston cavity; wherein, the first mounting cavity is divided into a left cavity and a right cavity by the on-off assembly, and the on-off assembly is driven to reciprocate through a change in pressure difference between the left cavity and the right cavity; the first pressure channel is in communication with the right cavity; the second pressure channel is configured to communicate the left cavity and the right cavity; the first circulation port is in communication with the pilot valve port; the second circulation port is in communication with the left cavity; and the first circulation port is a fluid outlet, and the second circulation port is a fluid inlet.

By applying the technical solution of this disclosure, this disclosure provides a valve module, including: a valve assembly, the valve assembly being provided with a first accommodating cavity, a piston cavity, and a pilot valve port arranged in sequence; a movable iron core movably arranged in the first accommodating cavity, the movable iron core being provided with a valve needle main cavity; a piston assembly movably arranged in the piston cavity, the piston assembly being configured to open and close the pilot valve port, the piston assembly being provided with a through piston channel, an end of the piston channel serving as a pressure relief port, and an other end of the piston channel being in communication with the pilot valve port; a return spring arranged in the first accommodating cavity, the return spring applying an elastic force towards the piston assembly to the movable iron core; and a small valve needle arranged in the valve needle main cavity, the small valve needle being configured to open and close the pressure relief port, wherein in a state that the pilot valve port is closed, the movable iron core is capable of abutting against the piston assembly, and the small valve needle closes the pressure relief port. In this disclosure, the movable iron core is configured to be capable of directly abutting against the piston assembly to ensure that the elastic force of the return spring can act on the piston assembly through the movable iron core, thereby ensuring the reliable switching of the solenoid valve. In this disclosure, during a closing process of the solenoid valve, the elastic force of the return spring is prevented from directly causing a relatively large impact on the pressure relief port to ensure the sealing at the pressure relief port during long-term use, thereby ensuring the flow accuracy of the solenoid valve and prolonging the service life.

### Brief Description of the Drawings

The accompanying drawings of the specification, constituting a part of this disclosure, are used to provide a further understanding for this disclosure. Exemplary embodiments of this disclosure and descriptions thereof are used to explain this disclosure, but do not constitute any improper limitation on this disclosure. In the accompanying drawings:
Fig. 1 shows a schematic diagram of an internal structure of a solenoid valve provided in an embodiment of this disclosure;
Fig. 2 shows a schematic diagram of an internal structure of a valve module provided in an embodiment of this disclosure;
Fig. 3 shows a schematic diagram of an internal structure of a valve module provided in an embodiment of this disclosure in a closing process 1 of a pilot valve port;
Fig. 4 shows a schematic diagram of an internal structure of a valve module provided in an embodiment of this disclosure in a closing process 2 of a pilot valve port;
Fig. 5 shows a schematic diagram of an internal structure of a valve module provided in an embodiment of this disclosure in a closing process 3 of a pilot valve port;
Fig. 6 shows a schematic diagram of an internal structure of a valve module provided in an embodiment of this disclosure in an opening process 1 of a pilot valve port;
Fig. 7 shows a schematic diagram of an internal structure of a valve module provided in an embodiment of this disclosure in an opening process 2 of a pilot valve port;
Fig. 8 shows a schematic diagram of an internal structure of a valve module provided in an embodiment of this disclosure in an opening process 3 of a pilot valve port;
Fig. 9 shows a schematic diagram of cooperation between a movable iron core and a small valve needle provided in an embodiment of this disclosure; and
Fig. 10 shows a schematic diagram of an internal structure of a piston assembly provided in an embodiment of this disclosure.

The above accompanying drawings have the following reference numerals:
10. valve assembly; 11. first accommodating cavity; 12. piston cavity; 13. pilot valve port; 14. valve seat; 15. sleeve;
20. movable iron core; 21. valve needle main cavity; 211. first spring cavity; 212. fluid channel; 213. valve needle cavity; 22. balance channel; 23. convex part;
30. piston assembly; 31. piston channel; 311. pressure relief port; 32. piston body; 33. sealing block;
40. return spring;
50. small valve needle;
60. valve needle spring;
70. electromagnetic assembly; 71. attractor;
80. first gasket;
90. valve body; 91. first mounting cavity; 92. first pressure channel; 93. second pressure channel; 94. first circulation port; 95. second circulation port;
100. on-off assembly;
110. check valve;
120. snap ring.

### Detailed Description of the Embodiments

The following clearly and completely describes technical solutions in embodiments of this disclosure with reference to the accompanying drawings in the embodiments of this disclosure. Obviously, the described embodiments are only some embodiments rather than all the embodiments of this disclosure. The following descriptions of at least one exemplary embodiment are merely illustrative actually, and should not be construed as any limitation on this disclosure and the application or use thereof. All other embodiments obtained by those of ordinary skill in the art based on the embodiments in this disclosure without creative work shall fall within the scope of protection of this disclosure.

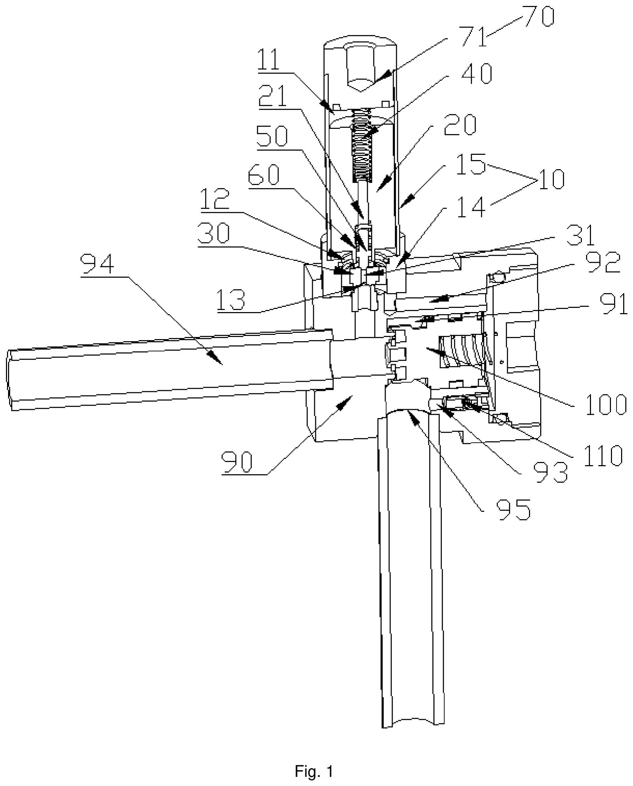

As shown in Fig. 1 to Fig. 10, some embodiments of this disclosure provide a valve module, including: a valve assembly 10, the valve assembly 10 being provided with a first accommodating cavity 11, a piston cavity 12, and a pilot valve port 13 arranged in sequence; a movable iron core 20 movably arranged in the first accommodating cavity 11, the movable iron core 20 being provided with a valve needle main cavity 21; a piston assembly 30 movably arranged in the piston cavity 12, the piston assembly 30 being configured to open and close the pilot valve port 13, the piston assembly 30 being provided with a through piston channel 31, an end of the piston channel 31 serving as a pressure relief port 311, and an other end of the piston channel 31 being in communication with the pilot valve port 13; a return spring 40 arranged in the first accommodating cavity 11, the return spring 40 applying an elastic force towards the piston assembly 30 to the movable iron core 20; and a small valve needle 50 arranged in the valve needle main cavity 21, the small valve needle 50 being configured to open and close the pressure relief port 311, wherein in a state that the pilot valve port 13 is closed, the movable iron core 20 is capable of abutting against the piston assembly 30, and the small valve needle 50 closes the pressure relief port 311.

In some embodiments of this disclosure, the movable iron core 20 is configured to be capable of directly abutting against the piston assembly 30 to ensure that the elastic force of the return spring 40 can act on the piston assembly 30 through the movable iron core 20, thereby ensuring the reliable switching of the solenoid valve. In this disclosure, during a closing process of the solenoid valve, the elastic force of the return spring 40 is prevented from directly causing a relatively large impact on the pressure relief port 311 to ensure the sealing at the pressure relief port 311 during long-term use, thereby ensuring a flow accuracy of the solenoid valve and prolonging a service life.

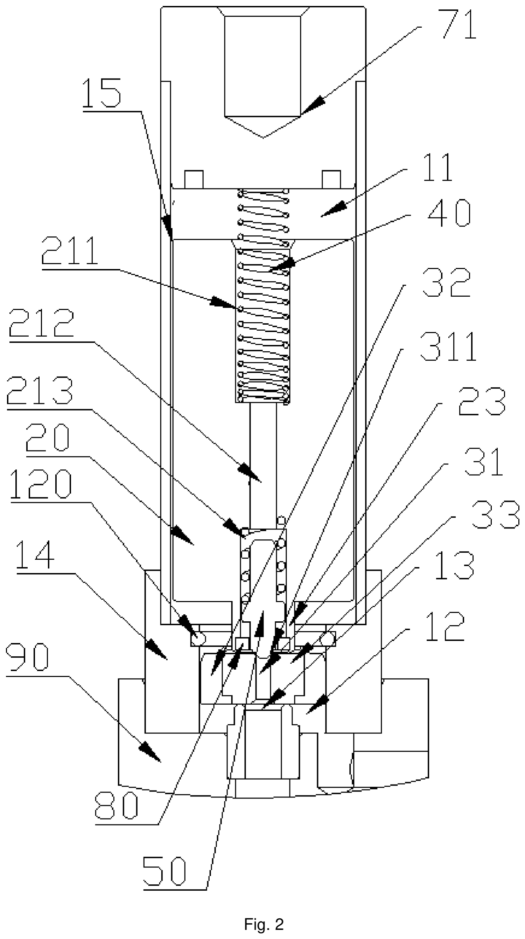

As shown in Fig. 1 and Fig. 2, the small valve needle 50 is movably arranged in the valve needle main cavity 21, the valve module further includes a valve needle spring 60, the valve needle spring 60 is arranged in the valve needle main cavity 21, and the valve needle spring 60 applies an elastic force towards the pressure relief port 311 to the small valve needle 50.

In some embodiments of this disclosure, the valve needle spring 60 is arranged between the movable iron core 20 and the small valve needle 50 to prevent the movable iron core 20 from directly conducting a force of the return spring 40 to the small valve needle 50. During a closing process of the solenoid valve, the elastic force of the return spring 40 is prevented from causing a relatively large impact on the pressure relief port 311 through the small valve needle 50 to ensure the sealing at the pressure relief port 311 during long-term use, thereby ensuring the flow accuracy of the solenoid valve and prolonging the service life. In the embodiments of this disclosure, the impact on the pressure relief port 311 is determined by a spring force applied by the valve needle spring 60 to the small valve needle 50. By adjusting elastic modulus of the valve needle spring 60 and the return spring 40, it is possible to ensure that an acting force at the pressure relief port 311 is less than an acting force at the pilot valve port 13. The valve needle spring 60 is configured to apply the elastic force towards the pressure relief port 311 to the small valve needle 50, so as to ensure the stability and reliability when the small valve needle 50 closes the pressure relief port 311.

As shown in Fig. 1 and Fig. 2, in some embodiments, the elastic force provided by the return spring 40 to the movable iron core 20 is greater than the elastic force provided by the valve needle spring 60 to the small valve needle 50. This arrangement ensures the reliability and rapidity of the piston assembly 30 in opening and closing the pilot valve port 13, and further reduces the impact of the small valve needle 50 on the pressure relief port 311.

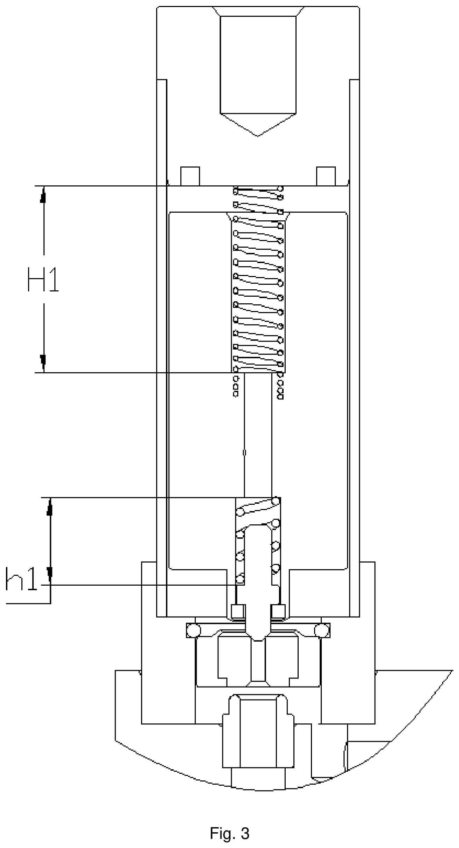

It should be noted that Fig. 3, Fig. 4, and Fig. 5 sequentially show continuous processes of closing the pilot valve port 13 by the valve module.

As shown in Fig. 1 and Fig. 2, when the movable iron core 20 and the small valve needle 50 move synchronously towards the piston assembly 30 until the small valve needle 50 is in contact with the piston assembly 30, the elastic force of the return spring 40 is F1, and the elastic force of the valve needle spring 60 is f1, wherein F1>5f1. This arrangement ensures that the movable iron core 20 moves rapidly under the action of the return spring 40, and then abuts against the piston assembly 30 after the small valve needle 50 is in contact with the pressure relief port 311.

It is worth noting that as shown in Fig. 1 and Fig. 2, the valve module further includes an electromagnetic assembly 70, and the electromagnetic assembly 70 controls the movable iron core 20 to move axially through an electromagnetic force. As shown in Fig. 3, in a state that the electromagnetic assembly 70 does not generate the electromagnetic force, the small valve needle 50 moves towards the pressure relief port 311, and the movable iron core 20 moves synchronously towards the piston assembly 30. When the small valve needle 50 is just in contact with the piston assembly 30, the elastic force provided by the return spring 40 to the movable iron core 20 is F1, and the elastic force provided by the valve needle spring 60 to the small valve needle 50 is f1.

In a specific embodiment of this disclosure, as shown in Fig. 1, the electromagnetic assembly 70 includes an attractor 71, and at least a part of the attractor 71 is arranged in the first accommodating cavity 11 and cooperates with an inner wall of the first accommodating cavity 11; and an other end of the return spring 40 abuts against the attractor 71.

As shown in Fig. 3, given that an original length of the return spring 40 is H0 and a rigidity (namely elastic modulus) is K, at this time, H1 in Fig. 3 shows a length of the return spring 40 at that time, and the spring force of the return spring 40 at this time is F1=K(H0-H1); and given that an original length of the valve needle spring 60 is h0 and a rigidity (namely elastic modulus) is k, at this time, h1 in Fig. 3 shows a length of the valve needle spring 60 at that time, and a spring force of the valve needle spring 60 at this time is f1=k(h0-h1).

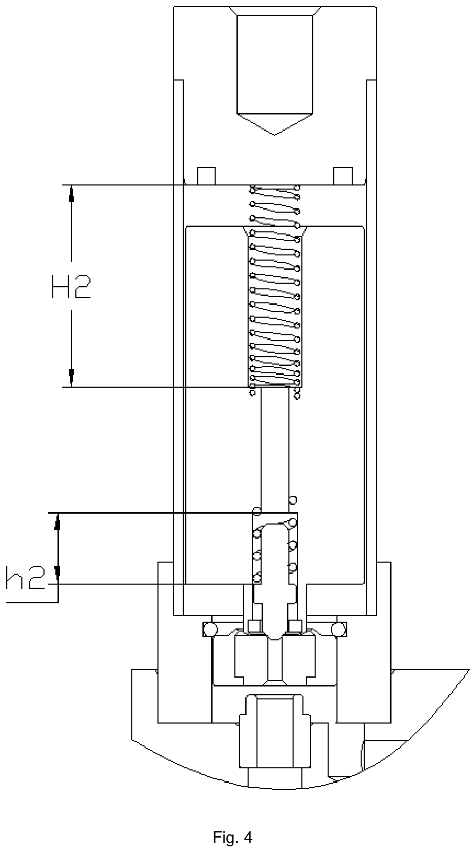

As shown in Fig. 4, when the movable iron core 20 moves towards the piston assembly 30 until the movable iron core 20 is in contact with the piston assembly 30, the elastic force of the return spring 40 is F2, and the elastic force of the valve needle spring 60 is f2, wherein F2>3.5f2. This arrangement ensures that the movable iron core 20 rapidly moves towards the piston assembly 30 under the action of the return spring 40.

It is worth noting that as shown in Fig. 4, after the small valve needle 50 closes the pressure relief port 311, the small valve needle 50 and the piston assembly 30 are relatively stationary, and the movable iron core 20 moves towards the piston assembly 30 (until the movable iron core 20 abuts against the piston assembly 30). When the movable iron core 20 is just in contact with the piston assembly 30, the elastic force provided by the return spring 40 to the movable iron core 20 is F2, and the elastic force provided by the valve needle spring 60 to the small valve needle 50 is f2.

As shown in Fig. 4, given that the original length of the return spring 40 is H0 and the rigidity (namely the elastic modulus) is K, at this time, H2 in Fig. 4 shows a length of the return spring 40 at that time, and the spring force of the return spring 40 at this time is F2=K(H0-H2); and given that the original length of the valve needle spring 60 is h0 and the rigidity (namely the elastic modulus) is k, at this time, h2 in Fig. 4 shows a length of the valve needle spring 60 at that time, and the spring force of the valve needle spring 60 at this time is f2=k(h0-h2).

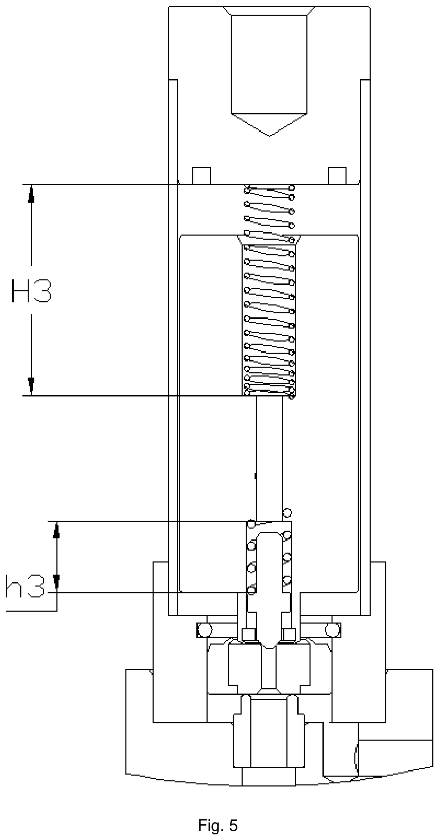

As shown in Fig. 5, when the movable iron core 20, the small valve needle 50, and the piston assembly 30 move synchronously towards the pilot valve port 13 until the piston assembly 30 is in contact with the pilot valve port 13, the elastic force of the return spring 40 is F3, and the elastic force of the valve needle spring 60 is f3, wherein F3>2f3. This arrangement ensures the rapidity and reliability when the small valve needle 50, the movable iron core 20, and the piston assembly 30 move together towards the pilot valve port 13, and ensures that when the valve needle spring 60 applies an elastic force to the small valve needle 50 (when the pressure relief port 311 is opened or closed), the state of the movable iron core 20 is not affected by the elastic force of the valve needle spring 60.

It is worth noting that as shown in Fig. 5, after the movable iron core 20 abuts against the piston assembly 30, the small valve needle 50, the movable iron core 20, and the piston assembly 30 are relatively stationary, and the small valve needle 50, the movable iron core 20, and the piston assembly 30 move together towards the pilot valve port 13. When the piston assembly 30 is just in contact with the pilot valve port 13, the elastic force provided by the return spring 40 to the movable iron core 20 is F3, and the elastic force provided by the valve needle spring 60 to the small valve needle 50 is f3.

As shown in Fig. 5, given that the original length of the return spring 40 is H0 and the rigidity (namely the elastic modulus) is K, at this time, H3 in Fig. 5 shows a length of the return spring 40 at that time, and the spring force of the return spring 40 at this time is F3=K(H0-H3); and given that the original length of the valve needle spring 60 is h0 and the rigidity (namely the elastic modulus) is k, at this time, h3 in Fig. 5 shows a length of the valve needle spring 60 at that time, and the spring force of the valve needle spring 60 at this time is f3=k(h0-h3), wherein F3>2f3. It can be known that because the small valve needle 50 and the movable iron core 20 are relatively stationary, at this time, the deformation of the valve needle spring 60 remains unchanged (h3=h2), and the applied elastic force also remains unchanged (f3=f2).

In conclusion, F1>5f1, F2>3.5f2, and F3>2f3 are respectively conditions that need to be met when the small valve needle 50 is just in contact with the pressure relief port 311, the movable iron core 20 is just in contact with the piston assembly 30, and the piston assembly 30 is just in contact with the pilot valve port 13. After the above conditions are met, these movement processes can be better achieved, so that the three processes that the small valve needle 50 is in contact with the pressure relief port 311, the movable iron core 20 is in contact with the piston assembly 30, and the piston assembly 30 is in contact with the pilot valve port 13 can be completed coherently and smoothly.

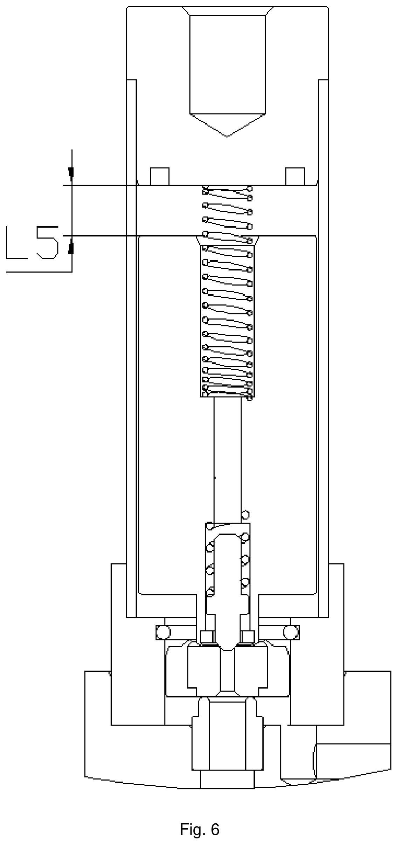

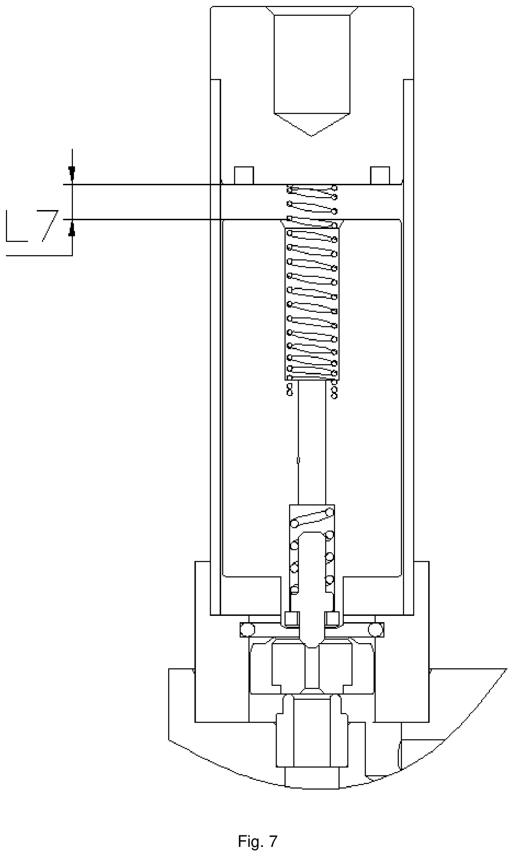

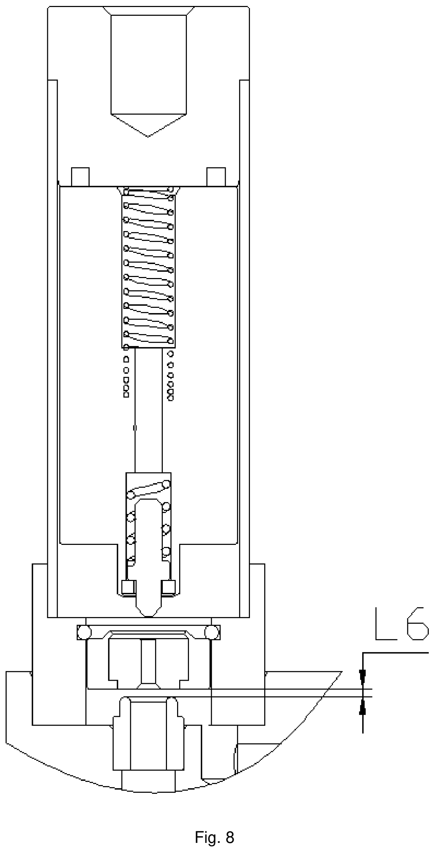

It should be noted that Fig. 6, Fig. 7, and Fig. 8 sequentially show continuous processes of opening the pilot valve port 13 by the valve module. As shown in Fig. 6, at this time, the small valve needle 50 seals the pressure relief port 311, the movable iron core 20 abuts against the piston assembly 30, and the piston assembly 30 closes the pilot valve port 13. L5 in Fig. 6 represents a maximum stroke of the movable iron core 20. The pilot valve port 13 is opened from the state in Fig. 6. As shown in Fig. 7, at this time, the small valve needle 50 starts to open the pressure relief port 311, the movable iron core 20 is out of contact with the piston assembly 30, and the piston assembly 30 still closes the pilot valve port 13. L7 in Fig. 7 represents a stroke of the movable iron core 20 after upward movement, wherein L7<L5. As shown in Fig. 8, at this time, the small valve needle 50 completely opens the pressure relief port 311, the movable iron core 20 continues to be out of contact with the piston assembly 30, and the piston assembly 30 completely opens the pilot valve port 13. L6 in Fig. 8 represents a maximum stroke of the piston assembly 30, namely a maximum distance between the piston assembly 30 and the pilot valve port 13. Thus, the pilot valve port 13 is completely opened.

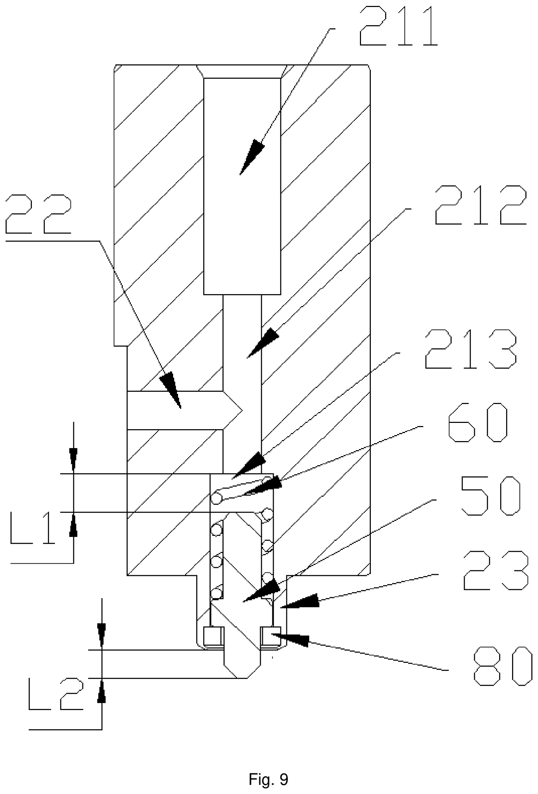

As shown in Fig. 9, a maximum deformation of the valve needle spring 60 in an axial direction is not less than a maximum length of a part of the small valve needle 50 extending out of the valve needle main cavity 21 in an axial direction. This arrangement structurally ensures that the small valve needle 50 is not in direct contact with the movable iron core 20, thereby effectively preventing the movable iron core 20 from directly conducting a force of the return spring 40 to the small valve needle 50.

It should be noted that as shown in Fig. 9, L1 in the figure represents the maximum deformation of the valve needle spring 60 in the axial direction, and L2 represents the maximum length of the part of the small valve needle 50 extending out of the valve needle main cavity 21 in the axial direction, wherein L1 is not less than L2.

As shown in Fig. 2 and Fig. 9, an end of the movable iron core 20 close to the piston assembly 30 is provided with a convex part 23, the convex part 23 is configured to abut against the piston assembly 30, and at least a part of the valve needle main cavity 21 is located in the convex part 23. This arrangement is beneficial for increasing a length of the valve needle main cavity 21 and increasing a stroke of the small valve needle 50; and during valve opening, an empty stroke of the movable iron core 20 is larger, which is more beneficial for valve opening.

In some embodiments, an area formed at an abutting position between the convex part 23 and the piston assembly 30 is not less than an area formed at an abutting position between the pilot valve port 13 and the piston assembly 30 (such as an area of the pressure relief port 311). This arrangement is beneficial for ensuring uniform force distribution of the piston assembly 30, thereby prolonging a service life of the piston assembly 30.

As shown in Fig. 2, the valve module further includes a snap ring 120, the snap ring 120 is arranged in the piston cavity 12 (for example, clamped and fixed in the piston cavity 12), the piston assembly 30 is located between the pilot valve port 13 and the snap ring 120, and the snap ring 120 is configured to axially limit the piston assembly 30. By arranging the snap ring 120, an upper limit of the piston assembly 30 is effectively achieved (upward direction in Fig. 2), thereby limiting a stroke of the piston assembly 30.

As shown in Fig. 9, the valve needle main cavity 21 includes a first spring cavity 211, a fluid channel 212, and a valve needle cavity 213 in communication sequentially; and a balance channel 22 is also formed inside the movable iron core 20, an end of the balance channel 22 is in communication with the first accommodating cavity 11, and an other end of the balance channel 22 is in communication with any of the first spring cavity 211, the fluid channel 212, and the valve needle cavity 213. By arranging the balance channel 22, stable pressure changes in the valve needle main cavity 21 are ensured, thereby ensuring the movement reliability of the movable iron core 20 in the first accommodating cavity 11.

As shown in Fig. 2 and Fig. 9, the valve module further includes a first gasket 80, the first gasket 80 is fixed on the movable iron core 20, and the first gasket 80 is in limiting fit with the small valve needle 50 to limit a displacement of the small valve needle 50 towards the piston assembly 30. By arranging the first gasket 80, an axial limit of the small valve needle 50 is ensured, and a movement stroke of the small valve needle 50 is effectively constrained.

It is worth noting that as shown in Fig. 2 and Fig. 9, the first gasket 80 is arranged at an outlet in the valve needle main cavity 21 and is in limiting fit with an inner wall of the valve needle main cavity 21; the first gasket 80 sleeves an outer circumference of the small valve needle 50, and an end surface of the first gasket 80 is in limiting fit with the small valve needle 50 to axially limit the small valve needle 50; and another end surface of the first gasket 80 is in axial limiting fit with an end of the movable iron core 20 close to the small valve needle 50 by riveting. By means of riveting, a reliable constraint on the first gasket 80 is ensured.

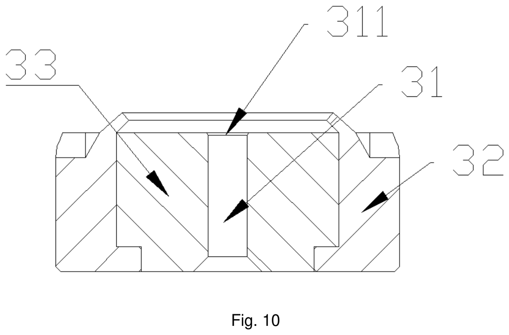

As shown in Fig. 2 and Fig. 10, the piston assembly 30 includes a piston body 32 and a sealing block 33, a limiting cavity is formed inside the piston body 32, and the sealing block 33 is arranged in the limiting cavity and is in limiting fit with an inner wall of the limiting cavity; and the piston channel 31 is arranged in the sealing block 33, wherein in a state that the piston assembly 30 closes the pilot valve port 13, the sealing block 33 is in abutting fit with the pilot valve port 13 (the sealing block 33 is configured to be in abutting fit with the pilot valve port 13 to close the pilot valve port 13). This arrangement not only ensures the simplification of a structure of the piston assembly 30 and effectively reduces the cost, but also ensures that the impact on the pilot valve port 13 is relatively small (because the sealing block 33 is in abutting fit with the pilot valve port 13 instead of the piston body 32); and the sealing block 33 can be made of elastic materials (such as rubber) to further reduce the impact on the pilot valve port 13.

As shown in Fig. 10, an end of the sealing block 33 towards the small valve needle 50 is in axial limiting fit with an end of the piston body 32 towards the small valve needle 50 by riveting. By means of riveting, mounting and processing are facilitated.

Specifically, it is worth noting that in a specific embodiment of this disclosure, as shown in Fig. 1, a valve assembly 10 includes a valve seat 14 and a sleeve 15; the piston cavity 12 and the pilot valve port 13 are arranged inside the valve seat 14; the first accommodating cavity 11 is formed inside the sleeve 15, and the sleeve 15 is arranged on the valve seat 14; the electromagnetic assembly 70 is arranged on the sleeve 15; the movable iron core 20 is in limiting fit with an inner wall of the first accommodating cavity 11; at least a part of a return spring 40 is arranged in the first spring cavity 211, and an end of the return spring 40 abuts against a bottom wall of the first spring cavity 211, so as to provide the elastic force for the movable iron core 20 in an axial direction of the movable iron core 20; the piston assembly 30 is in limiting fit with an inner wall of the piston cavity 12; at least a part of a small valve needle 50 is movably arranged in the valve needle cavity 213 and is in limiting fit with an inner wall of the valve needle cavity 213; and at least a part of a valve needle spring 60 is arranged in the valve needle cavity 213, an end of the valve needle spring 60 abuts against a top wall of the valve needle cavity 213, and an other end of the valve needle spring 60 abuts against the small valve needle 50.

As shown in Fig. 1, this disclosure further provides a solenoid valve, including the above valve module. The solenoid valve further includes: a valve body 90 internally provided with a first mounting cavity 91, a first pressure channel 92 in communication with the first mounting cavity 91, a second pressure channel 93 in communication with the first mounting cavity 91, a first circulation port 94 capable of being in communication with the first mounting cavity 91, and a second circulation port 95 in communication with the first mounting cavity 91; and an on-off assembly 100 movably arranged (for example, elastically arranged) in the first mounting cavity 91 and configured to control a connection or disconnection between the first circulation port 94 and the second circulation port 95; the valve module is arranged on the valve body 90, and controls the connection or disconnection between the first circulation port 94 and the second circulation port 95 by controlling the on-off assembly 100; the first pressure channel 92 is in communication with the piston cavity 12; wherein, the first mounting cavity 91 is divided into a left cavity and a right cavity by the on-off assembly 100, and the on-off assembly 100 is driven to reciprocate through a change in pressure difference between the left cavity and the right cavity; the first pressure channel 92 is in communication with the right cavity; the second pressure channel 93 is configured to communicate the left cavity and the right cavity; the first circulation port 94 is in communication with the pilot valve port 13; the second circulation port 95 is in communication with the left cavity; and the first circulation port 94 is a fluid outlet, and the second circulation port 95 is a fluid inlet.

As shown in Fig. 1, in a state that the piston assembly 30 opens the pilot valve port 13, the fluid in the right cavity of the first mounting cavity 91 sequentially passes through the first pressure channel 92, the piston cavity 12, and the pilot valve port 13 and then enters the first circulation port 94, a pressure in the right cavity of the first mounting cavity 91 is reduced, and under the action of the pressure difference (the pressure difference between the left cavity and the right cavity), the on-off assembly 100 moves rightward and the first circulation port 94 is in communication with the second circulation port 95; and in a state that the piston assembly 30 closes the pilot valve port 13, the fluid of the second circulation port 95 passes through a gap between the on-off assembly 100 and the first mounting cavity 91 and then enters the right cavity, a pressure in the left cavity and the pressure in the right cavity gradually balance, an elastic component is also arranged in the right cavity, and the elastic component provides an elastic force for enabling the on-off assembly 100 to move towards the left cavity, so that under the action of the elastic component, the on-off assembly 100 moves leftward to disconnect a communication between the first circulation port 94 and the second circulation port 95.

The solenoid valve provided in some embodiments of this disclosure effectively prevents the elastic force of the return spring 40 from causing a relatively large impact on the pressure relief port 311 through the small valve needle 50 to ensure the sealing at the pressure relief port 311 during long-term use, thereby ensuring the flow accuracy of the solenoid valve and prolonging the service life. Moreover, a working noise of the solenoid valve is relatively low.

As shown in Fig. 1, the solenoid valve further includes a check valve 110, and the check valve 110 is movably arranged in the second pressure channel 93. The check valve 110 is configured to ensure an one-way flow of the fluid in the second pressure channel 93, and an one-way flow direction of the fluid in the second pressure channel 93 is from the right cavity to the left cavity. By arranging the check valve 110, after the on-off assembly 100 moves rightward and the first circulation port 94 is in communication with the second circulation port 95, when there is an abnormal situation that a pressure intensity in the right cavity is larger than a pressure intensity in the left cavity, under the action of the pressure of the right cavity, the check valve 110 moves to enable the fluid in the right cavity to pass through the second pressure channel 93 and then enter the left cavity, so as to achieve an effect of rapid pressure relief in the right cavity, thereby improving the stability of communication between the first circulation port 94 and the second circulation port 95.

It should be noted that in a specific embodiment of this disclosure, the check valve 110 uses an existing common check valve structure to facilitate procurement, subsequent replacement, and maintenance.

In conclusion, this disclosure provides a valve module and a solenoid valve. In this disclosure, the valve needle spring 60 is arranged between the movable iron core 20 and the small valve needle 50 to prevent the movable iron core 20 from directly conducting the force of the return spring 40 to the small valve needle 50. During a closing process of the solenoid valve, a problem of the elastic force of the return spring 40 causing a relatively large impact on the pressure relief port 311 through the small valve needle 50 is avoided, so as to ensure the sealing at the pressure relief port 311 during long-term use, thereby ensuring the flow accuracy of the solenoid valve and prolonging the service life. In this disclosure, the impact on the pressure relief port 311 is determined by the spring force applied by the valve needle spring 60 to the small valve needle 50. By adjusting the elastic modulus of the valve needle spring 60 and the return spring 40, it is possible to ensure that the acting force at the pressure relief port 311 is less than the acting force at the pilot valve port 13. The valve needle spring 60 is configured to apply an elastic force towards the pressure relief port 311 to the small valve needle 50 to ensure the stability and reliability when the small valve needle 50 closes the pressure relief port 311. The movable iron core 20 is configured to be capable of directly abutting against the piston assembly 30 to ensure that the elastic force of the return spring 40 can act on the piston assembly 30 through the movable iron core 20, thereby ensuring the reliable switching of the solenoid valve.

The above descriptions are merely preferred embodiments of this disclosure, but are not intended to limit this disclosure. For those skilled in the art, this disclosure may have various modifications and changes. Any modification, equivalent replacement, improvement, and the like made within the spirit and principle of this disclosure shall fall within the scope of protection of this disclosure.

## Claims

1. A valve module, comprising:
a valve assembly (10), the valve assembly (10) being provided with a first accommodating cavity (11), a piston cavity (12), and a pilot valve port (13) arranged in sequence;
a movable iron core (20) movably arranged in the first accommodating cavity (11), the movable iron core (20) being provided with a valve needle main cavity (21);
a piston assembly (30) movably arranged in the piston cavity (12), the piston assembly (30) being configured to open and close the pilot valve port (13), the piston assembly (30) being provided with a through piston channel (31), an end of the piston channel (31) serving as a pressure relief port (311), and an other end of the piston channel (31) being in communication with the pilot valve port (13);
a return spring (40) arranged in the first accommodating cavity (11), the return spring (40) applying an elastic force towards the piston assembly (30) to the movable iron core (20); and
a small valve needle (50) arranged in the valve needle main cavity (21), the small valve needle (50) being configured to open and close the pressure relief port (311);
wherein in a state that the pilot valve port (13) is closed, the movable iron core (20) is capable of abutting against the piston assembly (30), and the small valve needle (50) closes the pressure relief port (311).

2. The valve module according to claim 1, wherein the small valve needle (50) is movably arranged in the valve needle main cavity (21); and the valve module further comprises a valve needle spring (60), the valve needle spring (60) is arranged in the valve needle main cavity (21), and the valve needle spring (60) applies an elastic force towards the pressure relief port (311) to the small valve needle (50).

3. The valve module according to claim 2, wherein the elastic force provided by the return spring (40) to the movable iron core (20) is greater than the elastic force provided by the valve needle spring (60) to the small valve needle (50).

4. The valve module according to claim 3, wherein when the movable iron core (20) and the small valve needle (50) move synchronously towards the piston assembly (30) until the small valve needle (50) is in contact with the piston assembly (30), the elastic force of the return spring (40) is F1, and the elastic force of the valve needle spring (60) is f1, wherein F1>5f1.

5. The valve module according to claim 3, wherein when the movable iron core (20) moves towards the piston assembly (30) until the movable iron core (20) is in contact with the piston assembly (30), the elastic force of the return spring (40) is F2, and the elastic force of the valve needle spring (60) is f2, wherein F2>3.5f2.

6. The valve module according to claim 3, wherein when the movable iron core (20), the small valve needle (50), and the piston assembly (30) move synchronously towards the pilot valve port (13) until the piston assembly (30) is in contact with the pilot valve port (13), the elastic force of the return spring (40) is F3, and the elastic force of the valve needle spring (60) is f3, wherein F3>2f3.

7. The valve module according to claim 2, wherein a maximum deformation of the valve needle spring (60) in an axial direction is not less than a maximum length of a part of the small valve needle (50) extending out of the valve needle main cavity (21) in an axial direction.

8. The valve module according to claim 1, wherein an end of the movable iron core (20) close to the piston assembly (30) is provided with a convex part (23), the convex part (23) is configured to abut against the piston assembly (30), and at least a part of the valve needle main cavity (21) is located in the convex part (23).

9. The valve module according to claim 8, wherein an area formed at an abutting position between the convex part (23) and the piston assembly (30) is not less than an area formed at an abutting position between the pilot valve port (13) and the piston assembly (30).

10. The valve module according to claim 1, wherein the valve module further comprises a snap ring (120), the snap ring (120) is arranged in the piston cavity (12), the piston assembly (30) is located between the pilot valve port (13) and the snap ring (120), and the snap ring (120) is configured to axially limit the piston assembly (30).

11. The valve module according to claim 1, wherein the valve needle main cavity (21) comprises a first spring cavity (211), a fluid channel (212), and a valve needle cavity (213) in communication sequentially; and a balance channel (22) is also formed inside the movable iron core (20), an end of the balance channel (22) is in communication with the first accommodating cavity (11), and an other end of the balance channel (22) is in communication with any of the first spring cavity (211), the fluid channel (212), and the valve needle cavity (213).

12. A solenoid valve, comprising the valve module according to any one of claims 1 to 11, wherein the solenoid valve further comprises:
a valve body (90) internally provided with a first mounting cavity (91), a first pressure channel (92) in communication with the first mounting cavity (91), a second pressure channel (93) in communication with the first mounting cavity (91), a first circulation port (94) capable of being in communication with the first mounting cavity (91), and a second circulation port (95) in communication with the first mounting cavity (91); and
an on-off assembly (100) movably arranged in the first mounting cavity (91) and configured to control a connection or disconnection between the first circulation port (94) and the second circulation port (95);
the valve module is arranged on the valve body (90), and controls the connection or the disconnection between the first circulation port (94) and the second circulation port (95) by controlling the on-off assembly (100); the first pressure channel (92) is in communication with the piston cavity (12);
wherein, the first mounting cavity (91) is divided into a left cavity and a right cavity by the on-off assembly (100), and the on-off assembly (100) is driven to reciprocate through a change in pressure difference between the left cavity and the right cavity; the first pressure channel (92) is in communication with the right cavity; the second pressure channel (93) is configured to communicate the left cavity and the right cavity; the first circulation port (94) is in communication with the pilot valve port (13); the second circulation port (95) is in communication with the left cavity; and the first circulation port (94) is a fluid outlet, and the second circulation port (95) is a fluid inlet.
